# EUROPEAN PATENT APPLICATION

(11) **EP 1 605 244 A1**
(43) Date of publication of application: **14.12.2005**
(21) Application number: 04076702.2
(22) Date of filing: 09.06.2004
(51) Int. Cl.: G01N 1/30

(54) **Fixative composition**

(71) Applicant: Boon, Mathilde Elisabeth, 2301 GB Leiden (NL); Kok, Lanbrecht Piet, 2301 GB Leiden (NL)
(72) Inventor: Boon, Mathilde E., 2301 GB Leiden (NL)
(74) Representative: De Hoop, Eric

(57) **Abstract**

The invention relates to a fixative composition for preservation of tissue and biological samples. Current fixative compositions have the drawback that they do not sufficiently protect against DNA/RNA degeneration. The invention solves the problem and provides a fixative composition comprising one or more alkanols, polyethylene glycol having a molecular weight of 200 - 600, one or more weak organic acids in a combined concentration of 0.01 to 0.10 mole per liter of the fixative composition, and water.

## Description

### Background of the invention

This invention relates to a fixative composition for preservation of tissue and biological samples. Tissue preservation developed from the need for cadaver preservation in early anatomy studies dating from the Renaissance. This in part made use of knowledge obtained through the practice of embalming, leather and food processing/conservation which are even older. In the 17^{th} and 18^{th} century, monster specimen collections (of domestic animals and human origin) were much prized and prepared by specialists for transport throughout Europe. This required a transparent, readily available fluid or solution that was not toxic to work with. Initially, just as used in preservation of food, alcohol was extensively used for the purpose but as of the 19^{th} century formaldehyde ("formalin") came available for use which was not potable or taxed and thus offered advantages which outweighed its disadvantages: discoloration and texture changes. In addition to this it had strong anti-fungal / bactericidal properties appreciated even before knowledge of the causative organisms was developed.
Formaldehyde remained the mainstay of clinical and research tissue and biological sample preservation especially as the whole knowledge base for the microscopy based science of histology, cell biology and histopathology required continuity of image characteristics.

With the development of immunocytochemistry and early DNA studies the precise chemical basis of the formaldehyde effects on tissues was investigated for the first time. Although the propensity for the creation of cross links between structural tissue proteins and the proteinaceous parts of lipo- and glyco-proteins was soon established, little additional knowledge was sought. The characteristics and kinetics of tissue penetration unfortunately were not studied. Neither was the rate of degeneration of this moderately strong reducing agent (being an aldehyde) through oxidation by ambient oxygen.

Cross linking, resulting in masking of the 3-dimensional protein structures which function as epitopes, was accepted as the explanation for the inability to detect many antigens using in-situ labeling of these antigens. This even though in suspensions of fresh tissue extracts and using the Ouchterlony technique, these were evidently present. This defect was corrected for some applications by overheating of tissue, breaking the cross bonds (antigen retrieval). Other strategies involved reduction of the degree of cross-link formation by various additions to the formaldehyde based solutions. Amongst these were very toxic, heavy metal (amongst others mercury) salts. Reduced strengths of formaldehyde, so as to result in incomplete cross linking before tissue processing, were also tried. A small number of strategies made use of pure alcohol as a fixative of frozen sections or of very small biopsies.

Cross link formation is now recognized as a major barrier to the implementation of molecular biological techniques to the analysis of tissue and biological samples obtained for routine diagnostic purposes.

An additional effect of initial crosslinking of the proteinaceous component of outer layers of tissue samples, was the creation of a diffusion barrier which hindered further ingress of fixative to the deeper parts of biological tissue sample of more than a few millimeters in size, i.e. most clinically relevant biopsies and especially surgical resection specimens.
The slow penetration of formaldehyde allows much of the DNA/RNA present within such samples to degenerate beyond usefulness before such processes are arrested by the penetration of the fixative. The cross links when formed mask DNA/RNA to probes and primers for the purpose of in-situ hybridization or polymerase chain reaction. Extraction from the tissue and other biological samples is impaired by the cross linking of the proteins structurally integrated in the macromolecules of DNA and RNA with other protein present within the samples. When extracted, often with the use of fragmentation inducing agents, fragments are often too short to allow for other then very short fragment amplification in polymerase chain reaction based studies, significantly reducing the level of information which may be gained from such studies.
Most importantly perhaps, such techniques are difficult to implement in diagnostic routines as with the ensuing low to very low sensitivity of the procedures, negative results cannot be confidently interpreted.

Thus the current state of the art is that tissue and biological sample based preservation prior to further analytical processing or processing for the purpose of preparing microscopical slides is firmly based on the use of formaldehyde either on its own or as a main ingredient of varying mixtures.
This not only effectively precludes the rapid implementation of improved immunocytochemical testing for routine diagnostic and research purposes but, more importantly, wholly precludes the effective introduction of molecular biological techniques aimed at the study of DNA in routine clinical practice.

In addition, not mentioned before, there are serious drawbacks to the large scale use of formaldehyde solutions in the workplace. It is a known teratogen, is related to cancer development, may facilitate the development of industrial allergies and is fairly toxic in direct exposure. This requires extensive and costly safety measures in the design and operation of laboratories, transport containers and tissue processing instrumentation.

The effective elimination from clinical practice of this agent remains to be realized.

At this stage the unavailability of a non-cross linking preservation agent results in high costs of centralized investigations of biological (for example veterinary CNS samples in Mad Cow Disease) samples which use molecular biological techniques. Such samples are transported unfixed and thus potentially infectious. This has required the use of costly and cumbersome anti-infection procedures and measures.

An alternative fixative not containing formalin has been developed in the past, namely Kryofix (Merck, product no 5211). It is a mixture of ethanol and polyethylene glycol and it was brought on the market for fixation in the cryostat technique. It has been used not only for cryosection but also for plastic and paraffin sections (M. E. Boon c.s., Path. Res. Pract. 188, 832 - 835 (1992)).

Although Kryofix has been used in the past with success as an alternative fixative, also for histological purposes, nowadays it is no longer useful. Kryofix has the drawback that it does not sufficiently protects against DNA/RNA degeneration. In the current clinical practice DNA/RNA should be preserved in almost all specimens.

### Summary of the invention

The invention provides a fixation composition for preservation of tissue and biological samples comprising one or more alkanols, polyethylene glycol having a molecular weight of 200 - 600, one or more weak organic acids in a combined concentration of 0.01 to 0.10 mole per liter of the fixative composition, and water.

Accordingly the fixative composition of the invention comprises four constituents which form a solution.
The one or more alkanols are suitably low molecular weight alkanols having 1 - 6 carbon atoms, e.g. methanol, ethanol or isopropanol. Preferably ethanol or a mixture of ethanol and methanol are used.

The polyethylene glycol has a molecular weight of 200 - 600, and preferably a molecular weight of 200 - 300. The molecular weight may vary according to sample nature (solid tissue biopsy, urine, cervical smear, blood, etc).

The one or more weak organic acids are suitably formic acid, acetic acid or other carboxylic acids. Preferably the acid is acetic acid. The one or more acids are present in a concentration of 0.01 to 0.1 mole per liter of the fixative composition, preferably 0.025 to 0.05 mole per liter. The specific acid and the concentration used may differ and relate to the acidity and buffering capability of the tissue itself and relative content of glycosaminoglycans.

The amounts and ratios of the other components may vary over a wide range. Suitably the fixative composition of the invention comprises said one or more alkanols in an amount of 10 - 60 % by volume, said polyethylene glycol in an amount of 1 - 20 % by volume, and the balance of the composition being water (and of course a small amount of water). Preferably the polyethylene glycol is present in an amount of 5 - 10 % by volume.

The fixative composition of the invention
a. has a quantifiably accelerated tissue / biological sample penetration,
b. has a quantifiably improved stabilization rate of DNA/RNA in tissue/biological samples at up to or over 80% of DNA/RNA originally present. Although dependent on sample size this effect exists in samples of over 1 cm diameter,
c. quantifiably conserves DNA/RNA present within tissue / biological samples for a prolonged period at rates of over 80% for periods of up to 6 months at room temperature under test conditions,
d. quantifiably facilitates extractability of DNA/RNA from tissue / biological samples at fractions of > 80% for periods of up to 6 months at room temperature under test conditions,
e. quantifiably ensures amplifiability of DNA/RNA after exposure and or extraction from exposed and or processed tissue / biological samples up to amplified fragment length of 600 base pairs under test conditions.

In this, the fixative of the invention provides functionality not effectively provided by other historically available or recently developed fluids or solutions with the same overall aim.

Accordingly the fixative of the invention can be specifically used as a histological fixative, but of course it can also be used in cytology.

### Definitions

For the purpose of this invention a number of separate constituent processes involved in the process of tissue and biological sample preservation have required renewed or first (re-)definition. The definitions concerned are:

### Rapid initial dehydration:

In this process the water content of a sample tissue is rapidly reduced to a level at which biological processes are arrested. The most important of these are: natural rapid degradation of mRNA by normally present RN-ases and ischaemia induced autolysis of cell components inclusive of DNA and RNA by the release of lysosomal proteases.
This function is a rapid version of the air drying process used in food preservation of for example fruit as well as meat and fish protein.
This function is achieved by initial egress of water from the sample to the high osmotic value solution. In a second, partly overlapping phase, replacement of water within the sample through volume equilibration with the low molecular weight alcohol takes place. At this stage all cell functions are additionally arrested by denaturation through alterations of the 3-dimensional structure of proteins and other water dependent structures. This process has also been described by the inventor and others as representative of a form of coagulation.
This process is enhanced by the high concentration external to the sample of the polyethylene glycol (PEG).
PEG can also alter the natural structural state of water, in balance and competition with the glycosaminoglycans, this may further add to the inactivation of macromolecules by altering their hydration state and 3-dimensional configuration.

Precipitation of a number of molecules results from changes in electrostatic shielding of the associated water mantle.

Separately from destructive enzyme de-activation, dehydration results in a nonlinear reduction of the tendency of DNA to hydrolyse in an aqueous environment. This hydrolysis may be significant so as to result in recognizable / detectable/quantifiable release of DNA fragments into the fluid compartment surrounding the sample / specimen. This DNA consists of progressively shortening (through continued hydrolysis) fragments, precluding attempts at amplification of contained genome informative segments. This process was first described and quantified by the inventor.

There is a partly undesired side effect of the use of low molecular weight alkanols. These compounds will have a reductor property, with a variable K-value dependent on the molecular weight of the alkanol and the number and position of the OH-groups. Ethanol and methanol as such are effective reductors and in too high concentrations, especially with uncoiled and free DNA, may be destructive. The effects of this property need to be controlled using the solution constituents to maintain a low acid pH, in which the reductor effect is exponentially less active, and which helps to keep the DNA in a state of coiling effectively reducing the exposure of reductor vulnerable sites within these macro-molecules.

### Volume replacement:

In this process much of the water initially removed is slowly replaced by the PEG allowing the sample, which has initially lost some volume, to re-expand to original dimensions.
This process occurs with any fixative, may be on part or whole permanent and, by differences between tissue constituents (epithelium / connective tissue - mucins/cytoplasm) result in shearing forces within the tissue also known as or described as " shrinkage". This phenomenon is subsequently enhanced or masked, at least secondarily affected by the final processing of tissue and cells to paraffin in which total dehydration is associated with massive, cyclic processes of size reduction and re-expansion, a process as poorly understood in nature as in a quantitative sense. Clefts in tissue sections resulting from differential shrinkage / expansion kinetics may differ between specimens related to the period of pre-preservation ischaemia (presumably through differences in glycosaminoglycan associated binding of free water), differences in specimen composition (especially of composition of (age related - see below) ground substance and especially of specimen size as the balance between the diffusion dependent relative progress of each of the competing / synergistic processes is severely affected by extended diffusion pathways.
Optimal results for fixative composition therefore can be determined within certain boundaries of confidence only if sample size / slice thickness is controlled and kept within pre-defined limits.

### Glycosaminoglycan stabilisation:

Glycosaminoglycans rapidly hydrolyse in aqueous environment so as to bind free water, which in cells or ground substance is potentially destructive and therefore for evolutionary reasons has given rise to a mechanism for control. Effectively this virtually all but eliminates a true aqueous solution in which most cellular enzymes must operate and through which diffusion of any water dissolved therapeutic or biological moieties move into, within or through tissue and cell compartments. Although much of intracellular transport and transport across cell membranes of molecular moieties is facilitated through intra- and even inter-cellular channels, especially within the ground substance itself (the space in between living cells) all transport is by diffusion within water. Hydrolysis of glycosaminoglycans is a rapid process which, after isolation of a biopsy or tissue sample / organ fragment rapidly reduces the quantity of free water, increasingly slowing down over time the continued ingress of fixative agents into samples or progress of fixative distribution within the sample.

It has been found that glycosaminoglycan hydrolysis is virtually arrested completely (related to the K-value of the bonds in question) by a slight drop in pH, achieved through the addition of a low concentration of an acid into the fixative. This acid must have a K-value low enough so as not to result in destruction of DNA which is severely unstable under low pH conditions. Weak organic acids fulfill the requirements with respect to maintained or enhanced tissue permeation / ingress of the active component of the fixative as has been demonstrated using various moieties dependent on the tissue characteristics. A specific agent, acetic acid, in low concentrations is stable enough for practical applications and has the desired effects as demonstrated by extensive testing. At the concentrations used, as yet unexplained, acetic acid on its own, in water only does affect DNA negatively, however in combination with the other ingredients of the fixative of the invention, and within the tissue environment, such a deleterious effect on DNA seems not to exist and in fact the addition of this component to the overall fixative is critical to the results achieved.

It is evident from the above that a number of confounders exist in clinical situations that preclude from all but the most crude assessments of the relative advantages or benefits of a proposed new fixative using actual clinical specimens.

The most important of these are:
**a. Intraoperative warm ischaemia time**
   During operation, especially in cancer cases, organs will have their arterial supply and following this their venous drainage interrupted early in the procedure. This then may up to a number of hours before any such specimen is finally removed from the body and handed to a pathology or experimental team. Ischaemic warm time (37 degrees Celsius) thus varies considerably.
**b. Variables in postoperative removal cooling**
   After removal the specimen may travel directly to a pathology laboratory or may remain in there for a considerable amount of time. Often the tissue is placed in an amount of fixative not proportional to the specimen size which impairs cooling to room temperature or below if the fixative was stored cooled. If cutting up of the specimen is delayed overnight the center of any substantial specimen may not be permeated by any fixative and remain above 27 degrees Celsius for up to 14 hours or more.
**c. Variables in postoperative diffusion of fixative and sample preparation**
   Fixative permeation is very dependent on retaining a gradient across the surface of the specimen that is as high as possible. Volume of solution to volume of specimen ratios of > 20 x are easily realized for small (punch) skin biopsies or (through-cut) needle biopsies of liver and kidney. Mastectomy or colectomy specimens however would require 30 liter containers and these are generally not available. A specimen of > 1 kg is thus often doused with as little as 300 ml of fixative, covered with a towel or paper tissue soaked in fixative and thus at very unfavorable conditions with respect to maintenance of any relevant gradient, both of fluids and constituent active agents. The use of buffered formaldehyde provides no solution as the mass of the buffer is far exceeded by the mass of ischaemic tissue with progressive release of acid moieties that require buffering.

### Mechanisms

Also for the purpose of this invention the mechanisms involved in the process of tissue and biological sample preservation are described. However, the present invention is not considered to be bound or restricted by the description of the mechanisms.

### a. Ingress, fluid exchange processes, the three dynamics / 4 compartment model, DNA/RNA degradation

As presented above the ingress into the tissue / biological sample is governed by the characteristics of passive diffusion. Local binding of water and dissolved components of the solution results in various sinks that complicate model construction. This is further complicated by the compensatory shifts of water from the sample into the medium and at various stages from the medium into the sample.
This effectively occurs within and across a series of semi-permeable membranes with differing characteristics which, to further complicate matters, are affected in these characteristics by the interactions with the constituent moieties of the fixative in different ways at different moments in time.

These membranes create / separate 4 compartments:
a. the medium itself
b. the intercellular space (largely filled with ground substance)
c. the intracellular space, subdivided into
   c.1. the cytoplasm, and
   c.2. the intranuclear space

It is in this latter space (c.2.) that the target macro-molecules for molecular biological purposes are contained. The target epitopes for immunocytochemical purposes are distributed over the compartments b. and c.1/2.

From this it must be accepted that a very complex series of model calculations is required if one were to attempt theoretical modeling of this problem. We have therefore chosen to on the one hand recognize the existence of the various competitive and mutually, at least potentially, enhancing mechanisms, but on the other hand only deal with the problem in a series of consecutively more complex, empirical approaches.

### b. Fixation process proper, chemical interactions between DNA/RNA - tissue constituents - fixative components, preservation

DNA and RNA are stabilized in tissue primarily against the actions of destructive either lysosomal or nuclear enzymes that will degrade these molecules as part of normal processes aimed at conserving invested chemical energy. DN-ases and RNA-ases are in themselves proteins. In addition DNA and RNA are vulnerable to oxidation, reduction and hydrolysis by water and a host of dissolved biologically occurring or chemicals or agents present in fixatives.
Fixatives or preservation strategies aim either at neutralizing biological enzymes (by dehydration, cooling or even freezing) or at destroying these (crosslinking, heating). Dehydration may take the form of drying but replacement of water by alcohol or other solvents serves equally well. Binding of water by salt has a comparable function. Most of these techniques have been developed in the conservation of food but are equally applicable to preservation of tissue and biological samples.

The net balance between all these actions depends on penetration of the tissue by the fixative components. As such it is difficult to predict or derive from a theoretical approach.

### c. Tissue processing, DNA/RNA extraction / extractability

During tissue processing the tissue is subjected to serial immersion into alternative fluids that have the single aim of removing all water in order to replace water which is present in the tissue (up to 70% or more of its volume) with solid paraffin that allows for the preparation of very thin sections ready for microscopic examination. This requires mixtures of increasing concentrations of alcohol, which can be mixed with water. In those process much molecular content of the cells and tissue, inclusive of dissolved DNA (fragments) are removed form the tissue and lost to the suspensions. It is work from the inventor which has emphasized the magnitude of this process, especially with respect to DNA.

After removal of water, ethanol or a similar alcohol, is removed through comparable rinsing with an organic solvent that is mixable on the one hand with ethanol, on the other with paraffin. The latter allows for the final step of removal of the organic solvent and replacement with fluid (warm) paraffin. Again, with the fluid shifts much dissolved substance is lost. In the case of fat this may be a desirable and thus an intermediate step using chloroform or acetone, a fat dissolvent is used.

Each step in this process has the effect of repeated volume changes of the tissue, with the creation of internal shearing forces causing rifts and fractures along lines and planes of least resistance. Such artifacts can be recognized in many tissue samples.

The use of microwave and vacuum enhanced processing techniques has shown beneficial effects on tissue preservation, stainability, reduction of trauma artifacts and immunocytochemistry that are probably mostly based on reduction of the number of elution steps and the duration of exposure to water containing solvent phases.

As the balance between incoming and outgoing fluids is never at the same stage at different distances from the surface, this becomes an additional unpredictable issue and can only be studied by empirical approach.

### d. DNA/RNA amplification / amplifiability

DNA present in tissue and biological samples, prior to analysis may have been affected by various processes that all result in progressive limitation of the ability to study this moiety using molecular biological techniques.

Hydrolysis will result in fragments of DNA of variable lengths. Up to a certain degree in situ hybridization (FISH and others using radioactive probes) require only very short length of DNA to remain (6-14 base pairs). On a probabilistic basis such a fragment will usually continue to be available and after recognition of a positive signal after binding to such a preserved site, the degree of DNA damage in itself may go unappreciated.
The same occurs with croslinkage either to other DNA strands or to other tissue proteins or histone proteins. ISH may well continue to work and thus the magnitude of this process goes unrecognized. Many existing studies of DNA preservation related to a fixative use this form of assessment as the basis of a claim for functionality.

PCR similarly requires only short segments of preserved DNA for the initial binding of the primers which typically have a comparable base pair length. However, after this segment of DNA in between the attachment site, and this may be of several hundred base pair length, must be uninterrupted (either by hydrolytic cleavage or by crosslinking) in order for a full length (from one primer attachment site to the other) amplification product to be created which forms the basis of the serial exponential amplification process on which PCR applications rest.
Thus the need for PCR assessment, the present and future backbone of clinical and experimental molecular biology, requires a much higher standard of DNA preservation, not met by formaldehyde use or use of techniques using prolonged exposure in aqueous solutions without protection from oxidation and especially hydrolysis.

As there is no fundamental work on which to base any predictions of the effects of further modifications of a newly designed fixative on, empirical studies have been chosen by the inventor. These include a series of studies of the effects on PCR amplifiability of various alternative fixatives, the fixative of the invention and its separate constituent components on purified, commercially available, defined reference DNA as used for quality control of PCR.

### Examples and experiments

### Overall experimental design, general methods and materials:

For the experiments to be defined below, testicular samples of greyhound dogs, to be sterilized as part of an international dog rescue and replacement program, were obtained fresh and immediate at castration by a team of veterinary surgeons and immediately provided to the experimental group.

As the internal quality control for nearly all commercially available PCR detection assays uses primers for human beta-globin gene, and as this gene is conserved between dog and man, the commercially available primer sets were used for quality control in this study. The amplified product in dogs is of exactly the same length as that in man.
For sub-studies of the effect of the components of the fixative composition of the invention alone and in combination on pure DNA, compared to the effects of KryoFix and formaldehyde (see below) we used human reference DNA from the LightCycler Control Kit DNA (Roche, Germany, cat.no. 2158833).

The specific composition of the fixative of the invention used in the examples (unless indicated otherwise) was the following:
A 10 l solution was made by mixing:
4.84 l ethanol (100%), 4.44 l water, 0.7 l PEG 200 and 0.025 l glacial acetic acid.

The Kryofix used had the following composition:
A 10 l solution was made by mixing:
5.0 l ethanol (96%). 4.3 l water and 0.7 l PEG 300

The formaldehyde solution used had the following composition:
A 0.5 l solution was made by mixing:
50.0 ml formaldehyde 37%
412.5 ml buffer pH 7.0 (buffer according to Bancroft:
4.5 g NaH₂PO₄.2H₂₀ and 16.4 g Na₂HPO₄.12H2O)

Because of expected variances in glycosaminoglycan content and content of spermatozoa, animal study groups were formed:

| | | n |
|---|---|---|
| a. | Young male dogs < 6 months of age | 60 |
| b. | Adolescent male dogs > 6 months, < 2 years of age | 60 |
| c. | Adult male dogs, > 2 years of age | 62 |

Each group consisted of as many animals as were required for the purpose of the study. Groups were approximately equal in size, a total of 361 testicles were available for study from 182 male dogs (3 testicles not suited for study: 2 atrophy, 1 possible tumour).

From each group testicles were sectioned and parts were:
a. snap frozen in liquid nitrogen for later use
b. commenced on immediate experimentation for all base line and in variable suspensions for all T0 experiments
c. placed in variable suspensions according to study protocol for subsequent all T (30 minutes, 1 hour, 2 hours, 12 hours, 24 hours, 48 hours, 7 days, 14 days, 4 weeks) value experiments.

On site experiments for time points passed locally (up to T-24 and 48 hours) were carried through to final extracted DNA which, after stabilisation, was transported to Leiden Cytology and Pathology Laboratory (LCPL) for subsequent comparative studies and analysis by quantitative DNA concentration assessment of extractability/preservation and for assessment of amplifiability by quantitative PCR analysis.

Samples intended for > 12 hours T- values were transported to the LCPL and processed in-house for follow on values.

Reagents and equipment was transported between experimentation site and LCPL laboratory to ensure direct comparibility of results and findings.

For the purpose of the study of the relationship between sample size and results of all experiments, samples were prepared at source immediately after procurement of testis sample to tissue samples:
a. 1 × 1 × 1 mm
b. 2x2x2mm
c. 4x4x4mm

For all samples, in addition to size and age group of source animal, wet weight of sample (in 4 decimals) was recorded as a base calculator for all DNA concentrations in extraction fluids. Using final volume of elution fluid (in ml, 2 decimals) DNA yield/gram of wet weight for all specimens was calculated and recorded in Excell data files for subsequent analysis by uni- and multi-variate analysis of relationship using SPSS statistical package.

Prior to amplification studies, DNA was purified and possible remains of preservation fluid variants (especially formaldehyde) removed by repeated washing of concentrated DNA and elution fluid changes using QuiaGen micro-columns.

For the purpose of amplifiability studies, purified and extracted DNA was normalised to a standard quantity of DNA in a fixed volume of reaction suspension so as to allow for direct comparibility of results.
Samples of extracted DNA were serially diluted for simple comparison of amplification results using melting points of DNA and temperature curves provided by RealTime LightCycler PCR (Roche, Germany) for quality control of amplification procedure.

All studies were repeated twice in full on all samples of all sample sizes.
All experiments (time / sample size / fixative - fluid variants) were carried out in 6-fold using separate samples obtained from 6 different animals.

### Details of Materials and Methods:

Proteinase K: Qiagen, Germany, cat.no. 19133
DNA purification: QIAamp DNA Mini Kit, and tissue protocol (Qiagen, Germany, cat.no. 51306) - binding of DNA to silica gel in mini colum, elution fluid ethanol
DNA washed post extraction in progressive ethanol gradient.
Final suspension in TRIS-buffer.
High throughput technique: QIAvac 6S (Qiagen, Germany, cat.no. 19503)
Measurement of double stranded DNA: SmartSpec 3000 (BioRad, USA), using 260-280 nm range, micro-cuvettes (Brand, Netherlands).

PCR: qualitative using SYBR-Green 1.
FastStart DNA Master SYBR Green 1 Kit (Roche, Germany, cat.no. 2239264)
PCR mix: 2 microl LC-FastStart DNA Master SYBR Green (final conc 1x), 2.4 microl MgCl2 (final conc. 4mM) and 2 microl beta-globine Primer mix (final conc 0.5microM each)expanded with added PCR grade water to 18 microl. 2 microl of standard template DNA is added.
PCR program:
1 cycle 10 min, 95C. amplification cycles, n=45 cycles of 95C (10 sec), 55C (5 sec), 72C (10 sec). At the end of the 72C step there is a single color detection. This series followed by 1 cycle for assessment of melting curve / point starting at 95C (0 sec), 65C (15 sec), 95C (0 sec, transition rate 0.1, continuous colour detection). Final step, cooling to 40C.

PCR quantitative using LC-red 640 probes.
LightCycler-Control Kit DNA and LightCycler FastStart Master Hybridisation Probes (Roche Germany cat.no. 2158833 and 2239272).

PCR mix 2 microl LC-DNA Master Hybridisation Probes (final conc 1x), 2.4 microl MgCl2 (final conc 4mM) and 2 microl beta-globine Primer mix (final conc 0.5microM each), 2 microl beta-globin Hybridization Probe mix, LC-red 640 labelled (final conc Probe 1: 0.2 microM, Probe 2: 0.4 micrM) expanded with PCR grade water to a volume of 18 microl. To this is added 2 microl template DNA.
PCR program:
1 cycle of 30 min (95C), amplification with 45 cycles (95C, 0 sec), 55C (10 sec) and 72C (5 sec). At 55C a single colour detection. Final cooling down to 40C.

PCR target: human Beta-globin gene section of 110bp between primers.
Melting point for amplicon: 85C. Changes in melting point indicate shortening - lengthening of amplicon as a result of sectional loss or recombination.

### a. Fluid exchange, DNA/RNA stabilization / degradation

From initial experiments it was clear that DNA extraction from tissue samples, both small and large did not yield a curve along mathematically defined inverse logarithmic or exponential curves. Instead, DNA extraction results from tissue stored in saline or distilled water or even PCR buffer without preservation agents yielded DNA in a pattern that, although there are overall effects of animal age, sample size and ambient temperature, is characterised by an initial very low yield, a rising yield to 12-24 hours, a stable higher yield at 24-48 hours, followed by a more or less rapid reduction of yields over the subsequent 7 days - 4 weeks. Smaller specimens showed a more rapid reduction of the post 48 hours yield, but a more rapid initial increase. Overall yields from young animals were significantly lower than those of older animals (results not shown). At this stage it is assumed that oxidation to a limited degree but predominantly hydrolysis is the dominant cause of DNA loss to extraction under the circumstances tested.

Final re-analysis of representative samples at > 4 weeks out show a drop to 0 yield after approximately 12-14 weeks in all samples and sample types tested.
As a result all extraction results and all calculated yields in DNA / wet weight of the original sample were re-calculated as a % of the mean expected for a given sample size and point in time based on the yield curves for distilled water, room temperature, for young, adolescent and old animal state and for original sample size group.

### b. DNA/RNA preservation

Preservation of DNA is difficult to assess separately from extractability. DNA fragment size distribution was tested by running subsamples from representative series of extractions on electrophoresis gel. At this stage, and up to 2 hours very limited if any DNA fragmentation is recognisable, after 24 hours most of the extracted DNA is no longer present as wound - unwound macro-DNA coils but as fragments of very variable size. With time the distribution of these fragments changes to smaller fragments, again confirming the effects of hydrolysis as the predominant determinant of DNA degradation under these circumstances.
Amplifiability (see below) was considered the most important parameter and limited electrophoresis of extracted DNA to representative time points and intermediate sample size (2x2x2 mm) for all solution variants studied in the project.

### c. Tissue processing, DNA/RNA extraction

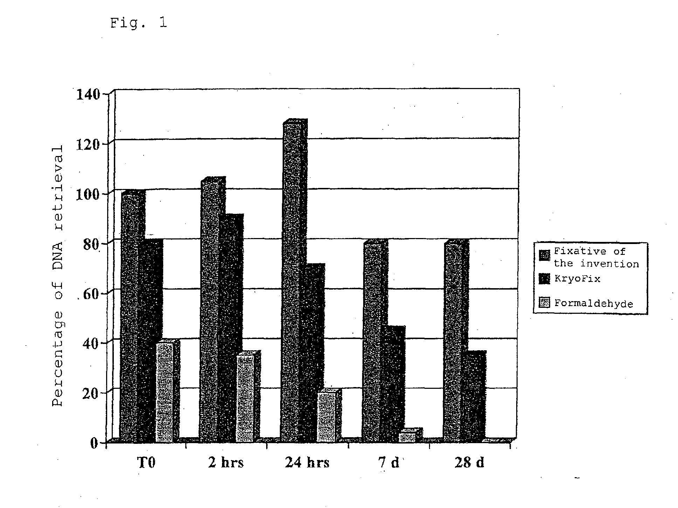

At each time point studied and for each suspension variant tissue samples were washed 3 times to remove excess preservation fluid (variants) and homogenised using mechanical reduction by disposable knife blades and tissue fragmentation using a blender. This was followed by resuspension in washing PCR buffer (twice) and sedimentation to remove last remains of any solution so as not to affect proteinase K-function. This step was followed by tissue digestion by Proteinase K solution according to manufacturers instruction of a fixed amount of wet weight tissue mass for each study point, and standardised reaction suspension fluid volume (Proteinase K-concentration and Proteinase-K tissue mass ratio).
The resulting suspension was used for the extraction of DNA using the methods described above.
The most informative results of DNA extraction are presented in Fig. 1, wherein all data are normalized to water. These concern the extraction results of adult animals, young animals presented unexpected lower results not explained by the absence of mature spermatozoic mass in the tubules. The conclusion was that differences exist in glycosaminoglycan contents that dominate in magnitude over variations related to changes in other parameters.

Note that the fixative of the invention results in > 100% DNA yield as compared to water, whereas yield with Kryofix does not have this characteristic.

All variants of components of the fixative of the invention alone and in combinations, as well as the use of PEG alone in variable concentrations, result in significantly lower yield. The addition of a low concentration of a weak organic acid such as acetic acid is especially critical. Without this addition a fixative based on PEG and ethanol only does not give better results than either KryoFix or ethanol alone.

Note the stable plateau emerging for the fixative of the invention yields at approximately 80% of starting yields, not seen with other fixatives.

When this study is repeated after tissue processing using sections from such paraffin blocks, results remain similar. This would suggest that the tissue processing does not result in extensive additional loss of DNA from the samples within the various exchanges.

The results indicate that after 24 hour fixation by immersion, the fixative of the invention results in a five-fold DNA return from paraffin embedded tissue as compared to formaldehyde. This difference increases extensively to 40x at 7 days and after 28 days fixation in formaldehyde suspension no DNA was effectively recovered from the tissue samples before or after embedding.

Further experiments were carried out with various fixatives in which the percentages of polyethylene glycol, ethanol and acetic acid were varied. The results are shown in Tables 1.1 - 1.3. Note that the amount of acetic acid is shown as percentage by volume, whereas in the claims the amount is given in moles per liter. Some of the compositions having a higher concentration of acetic acid are not covered by the scope of the invention.

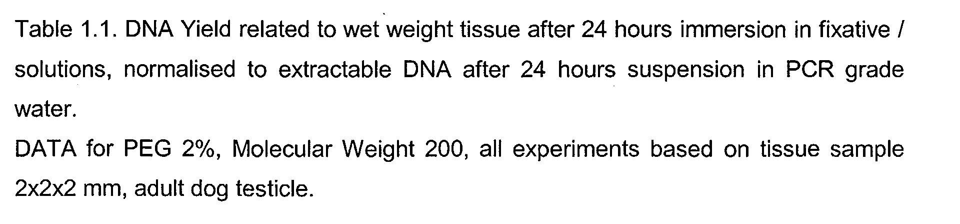

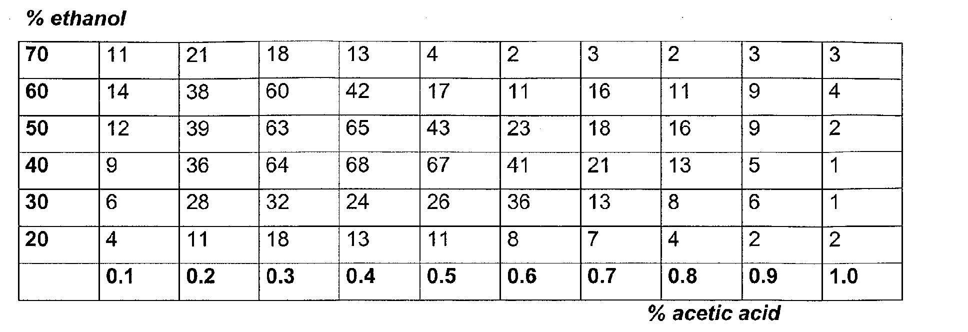

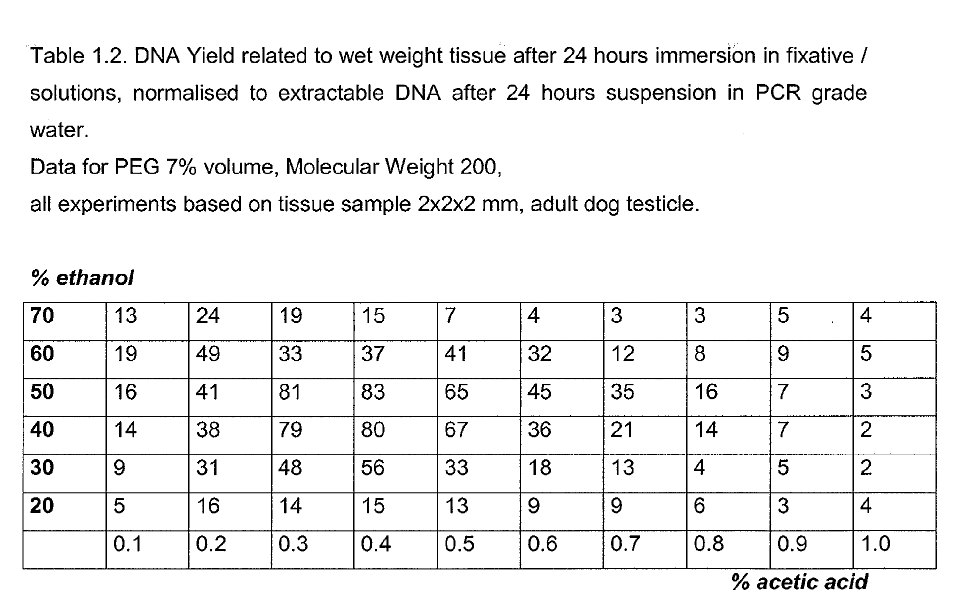

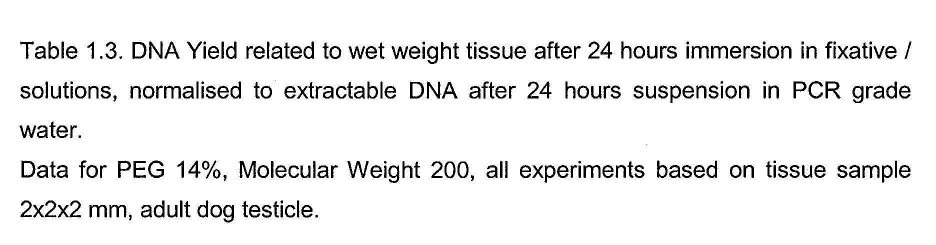

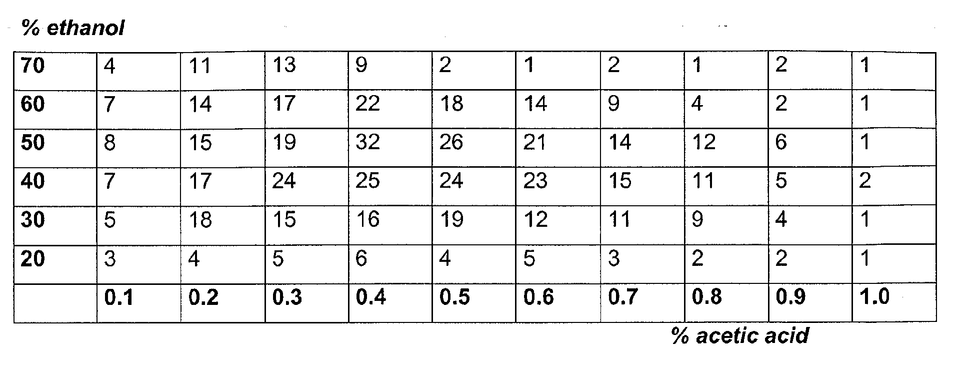

Further experiments were carried out with various fixatives in which different kinds of PEG are included. The results are shown in Tables 2.1 - 2.3. All fixatives of Tables 2.1 and 2.3 and some of Table 2.2 do not fall under the scope of the invention.

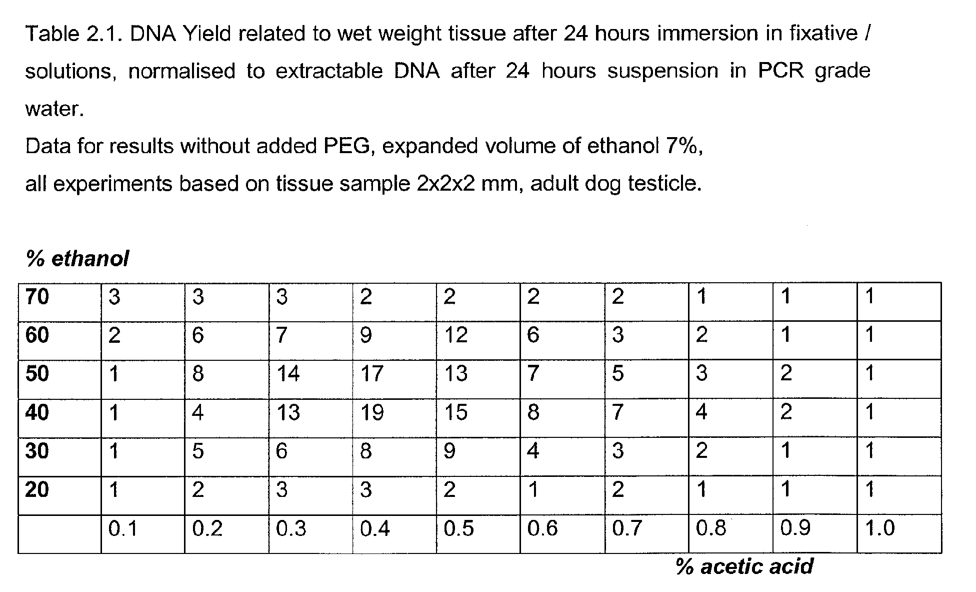

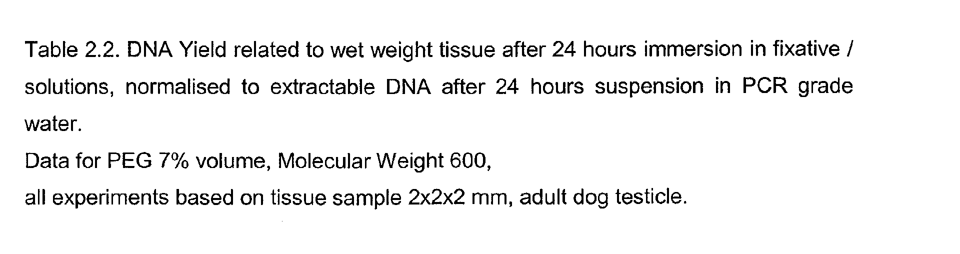

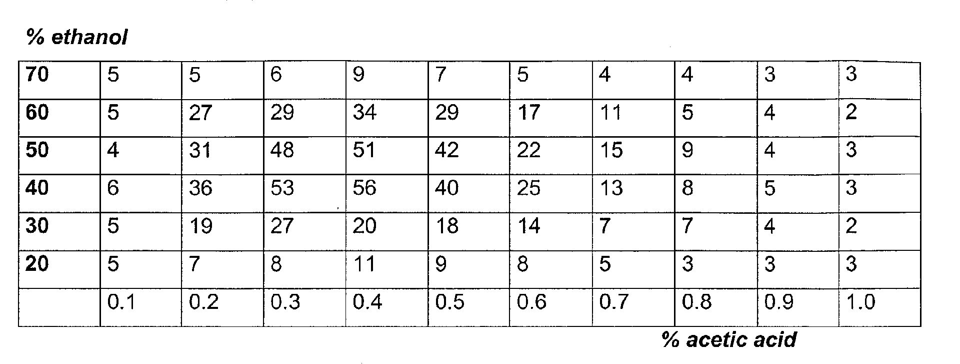

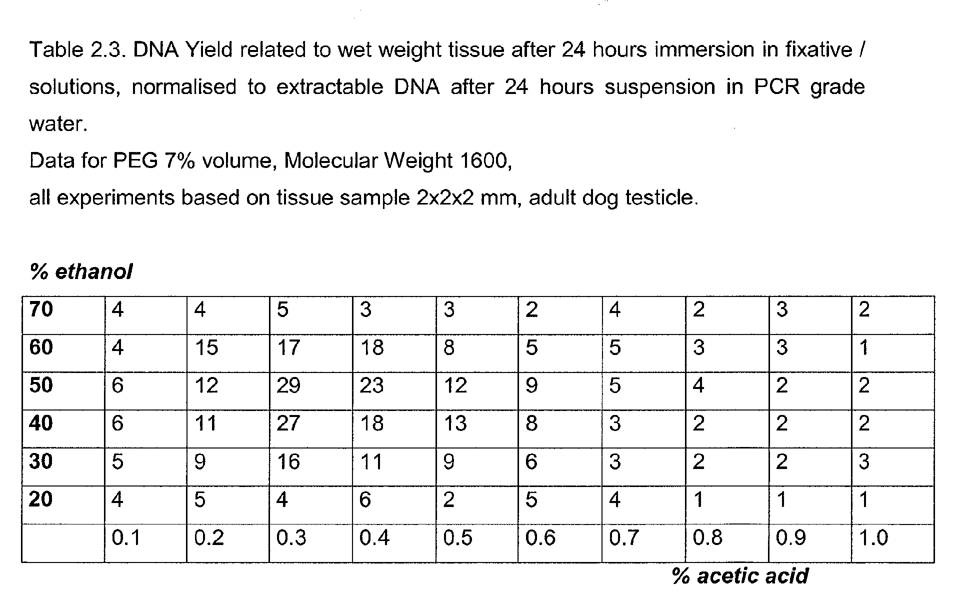

### d. DNA/RNA amplification

First the effects of direct exposure of reference human DNA to fixatives and the constituent components were studied.

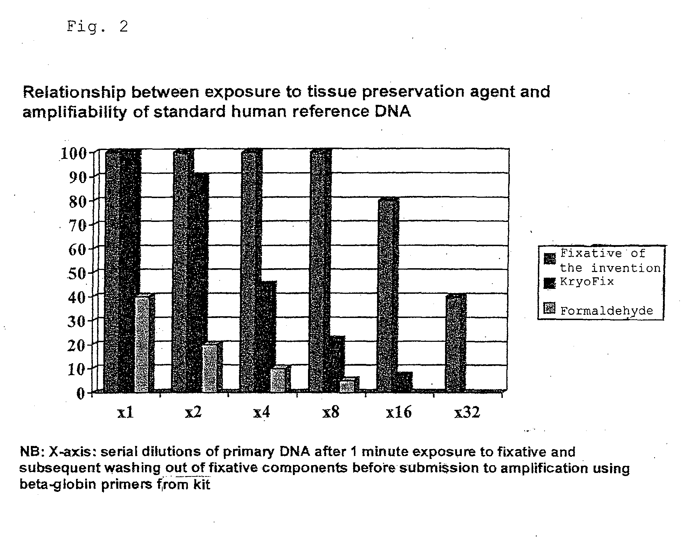

The results are shown in Fig. 2. It is evident that primary damage to the extracted DNA, either incurred before extraction while in-situ in the tissue or after extraction is a major contributor to the differences between the results of PCR analysis of DNA preserved in various different ways.
These results explain in part but not fully the magnitude of the results of analysis of DNA extracted from tissue samples.

It is of interest that the results can not be predicted from summation effects of the results of individual components of the fixative of the invention. Especially low concentrations of acetic acid, while stabilising reference DNA, have a significant unexpected synergistic effect when added in low concentrations to the mixture. In higher and lower concentrations no linearity between concentration and effect on preservation / extractibility and on amplifiability is seen.

In summary the results of these dilution experiments would suggest that for this particular sample amplifiable DNA with the use of the fixative of the invention is present in quantities at approximately 20x that after Kryofix exposure and that formaldehyde exposure is even more deleterious.

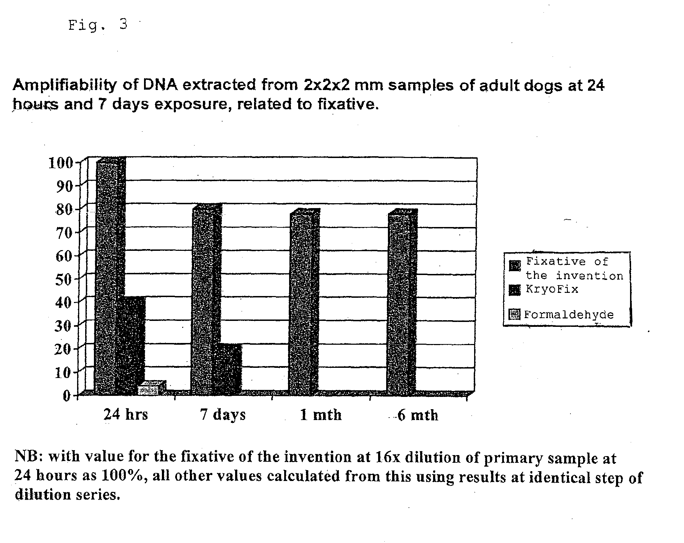

Fig. 3 shows the results of representative analysis using standardised quantities of extracted DNA (see MM text) and amplification procedures. A series of dilutions of the primary sample at 1 day (24 hours) and 7 days is presented.

From these results it is evident that after actual extractions the yield differences are increased as compared to those resulting from exposure of reference standardised human DNA. Already at 24 hours a difference of 30-40 x exists for the quantity of amplified product.

Marginal reductions are found for the fixative of the invention with increase of sample size to 4x4x4 mm even after prolonged exposure. In contrast, with use of Kryofix and especially formaldehyde, there is a markedly inferior result at this specimen size (results not shown).

Further experiments were carried out with various fixatives in which the percentages of PEG (MW 200) and acetic acid were varied. The results are shown in Table 3. The compositions having a higher concentration of acetic acid do not fall under the scope of the invention.

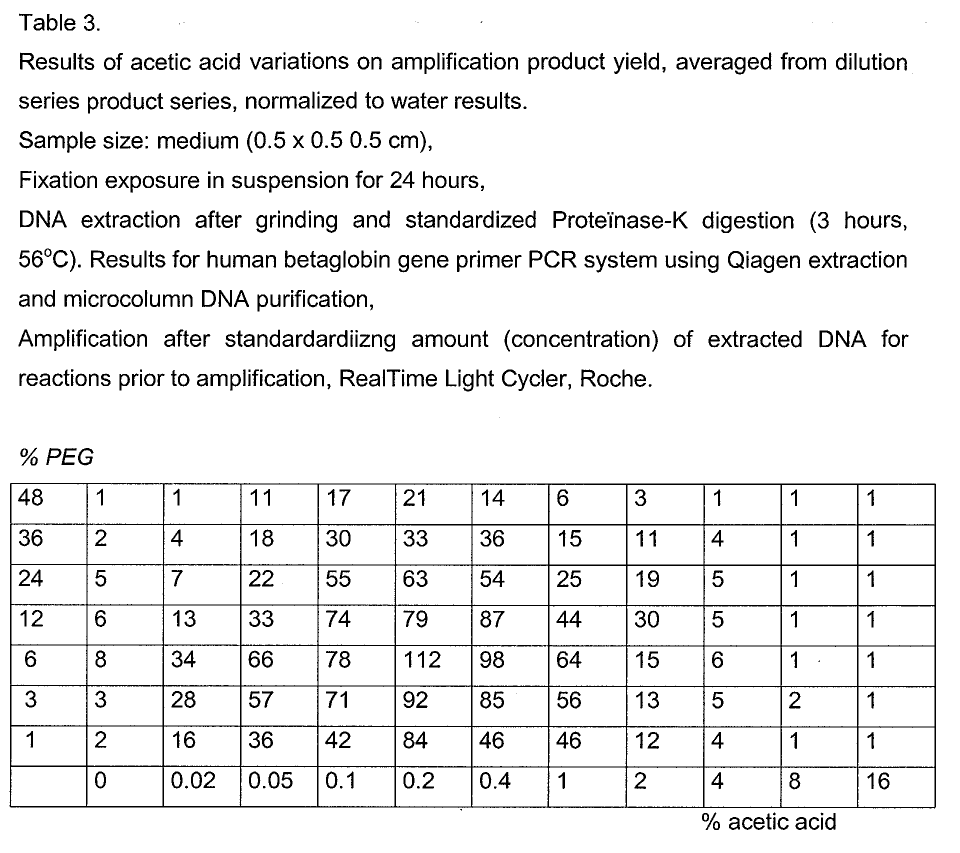

From the findings presented above, it is evident that the fixative composition of the invention gives demonstrable and quantifiable results with respect to preservation, extraction and amplification of target diagnostic DNA in tissue specimens of all sizes.

### Penetration.

It would seem that part of the overall effect results from enhanced penetration into the tissue of the fixative agent. This is especially evident in the retained preservation with the fixative of the invention of DNA in larger samples as compared to small samples where this is not the case in the other fixatives studied.

### Preservation.

From the experiments it seems evident that DNA preservation under the conditions studied achieves 80% of maximal potential value and is stable up to 4 weeks out.

Subsequent experiments provide confirmation that this effect is maintained at up to 6 months.

### Extraction.

There is good evidence that the fixative of the invention improves extractability of DNA/RNA from tissue - biological samples at ratios of up to 20-40 times that of alternative solutions.

### Amplifiability.

Similarly there is quantitative information that demonstrates increased amplifiability of DNA/RNA after exposure to the fixative of the invention as compared to alternative agents.

In this, the fixative of the invention provides functionality not effectively provided by other historically available or recently developed fluids or solutions with the same overall aim.

It is evident from the results that the fixative composition of the invention was not to be predicted from either individual results or from model based calculations. The composition is optimal for specimens of the type and quality as studied. It may be that for larger or very much smaller samples the composition may be improved using further modifications based on new experiments. It would seem however that, in view of the consistency of the differences as found, that if DNA preservation is the overall aim, the evidently more rapid penetration of the fixative would suggest preferential use of the fixative of the invention even for very large specimens.

## Claims

1. A fixative composition for preservation of tissue and biological samples comprising one or more alkanols, polyethylene glycol having a molecular weight of 200 - 600, one or more weak organic acids in a combined concentration of 0.01 to 0.10 mole per liter of the fixative composition, and water.

2. The fixative composition of claim 1, which comprises:
said one or more alkanols in an amount of 10 - 60 % by volume,
said polyethylene glycol in an amount of 1 - 20 % by volume, and the balance of the composition being water.

3. The fixative composition of claim 2, which contains said polyethylene glycol in an amount of 5 - 10 % by volume.

4. The fixative composition of any of the preceding claims, in which said one or more weak organic acids are present in a combined concentration of 0.025 to 0.05 mole per liter.

5. The fixative composition of any of the preceding claims, in which said alkanol has 1 - 6 carbon atoms.

6. The fixative composition of claim 5, in which said alkanol comprises ethanol.

7. The fixative composition of any of the preceding claims, in which said polyethylene glycol has a molecular weight of 200 - 300.

8. The fixative composition of any of the preceding claims, in which said weak organic acid is acetic acid.
